# EUROPÄISCHE PATENTSCHRIFT

(11) **EP 1 813 919 B1**
(45) Veröffentlichungstag und Bekanntmachung des Hinweises auf die Patenterteilung: **07.03.2012**
(21) Anmeldenummer: 07000391.8
(22) Anmeldetag: 10.01.2007
(51) Int. Cl.: G01F 23/26, B22D 2/00, B22D 11/18, B22D 11/20, C21C 5/46, F27D 21/00

(54) **Vorrichtung zum Bestimmen einer Grenzfläche einer Schlackeschicht auf einer Metallschmelze**
Device for determining the interface between slag and metal melt
Dispositif pour déterminer l'interface entre les scories et l'acier fondu

(30) Priorität: 26.01.2006 DE 102006003950
(43) Veröffentlichungstag der Anmeldung: 01.08.2007
(73) Patentinhaber: Heraeus Electro-Nite International N.V., 3530 Houthalen (BE)
(72) Erfinder: Knevels, Johan, 3960 Bree (BE); Cappa, Guido, 3530 Houthalen (BE)
(74) Vertreter: Kühn, Hans-Christian

(56) Entgegenhaltungen:
- WO-A-03/060432
- GB-A- 2 053 486
- JP-A- 2003 049 215
- US-A- 5 781 008

## Beschreibung

Die Erfindung betrifft eine Vorrichtung zum Bestimmen mindestens einer Grenzfläche einer Schlackeschicht auf einer Metallschmelze mit einem Trägerrohr, an dessen einem Ende ein Messkopf angeordnet ist mit einem vorzugsweise zylindrischen, in dem Trägerrohr fixierten Körper, der eine dem Trägerrohr abgewandte Stirnseite aufweist.

Derartige Vorrichtungen sind beispielsweise aus DE 36 41 987 A1 bekannt. Hier wird eine Induktionsspule innerhalb eines Trägerrohres angeordnet, um die Schlackenhöhe auf Stahlschmelzen zu bestimmen. Aus DE 44 02 463 A1 ist bekannt, einen ersten elektromagnetischen Sensor und einen zweiten Sensor gemeinsam zur Ermittlung der Schlackedicke zu verwenden. Aus WO 98/14755 ist des weiteren ein Sensor zur Messung der Schlackedicke bekannt, bei dem mit Hilfe eines Lichtleiters die Schlacke vermessen wird. Gemäß DE 31 33 182 C1 wird ein Metallbadspiegel mit Hilfe einer Spannungsänderung durch Kurzschlussbildung bestimmt. JP 2003049215 offenbart die Bestimmung der Schlackedicke mit Hilfe zweier Induktionsspulen. Eine weitere Vorrichtung zum Messen der Dicke einer Schlackeschicht ist aus WO 03/060432 A1 bekannt. Hier wird die Verwendung einer verbrauchbaren Messelektronik innerhalb eines Sensors beschrieben, wobei die Sensorsignale drahtlos an einer Auswertestation übertragen werden. Es ist auch bekannt, die Schlackedicke mittels Mikrowellen zu bestimmen (US 5,182,565). Aus US 5,781,008 ist eine Messeinrichtung bekannt, bei der Induktionsspulen innerhalb eines Messkopfes angeordnet sind.

Der obengenanten Erfindung liegt die Aufgabe zugrunde, eine verbesserte Messvorrichtung zur Verfügung zu stellen, mit der sehr genau eine auf einer Metallschmelze aufliegende Schlackeschicht vermessen werden kann.

Die Aufgabe wird durch die Merkmale des unabhängigen Anspruchs gelöst. Vorteilhafte Ausgestaltungen sind in den Unteransprüchen angegeben. Dadurch, dass im Inneren des Messkopfes eine Leiterplatte (oder ein Leiterrahmen oder eine andere Einrichtung zur Aufnahme elektrischer Bauelemente) mit einem Oszillator und außerhalb des Körpers, vor dessen stimseitigern Ende, eine mit dem Oszillator verbundene Induktionsspule angeordnet ist, ist eine sehr genaue Bestimmung der Grenzfläche beispielsweise zwischen Schlacke und darunter liegender Stahlschmelze möglich, da die Induktionsspule, zumindest bei entsprechend exakt eingestellter nachgeschalteter Elektronik, eine Änderung des Übergangs aus Schlacke in die leitende Metallschmelze sehr exakt wahrnimmt und eine entsprechende Signaländerung sehr genau an den Übergang der beiden Materialien gekoppelt ist. Die Höhe der Grenzfläche wird korreliert entweder mit der Absenkgeschwindigkeit des Messkopfes, wobei die Zeit vom Beginn der Bewegung bis zur Signaländerung gemessen wird oder unmittelbar mit der Lageänderung des an dem Trägerrohr befestigten Messkopfes (Positionsmessung), so dass die exakte Position der Induktionsspule zum Zeitpunkt der Signaländerung gesichert festgestellt werden kann. Die Signale werden in üblicher Weise über ein Kontaktstück mit den durch eine Lanze geführten Signalleitungen verbunden, die an eine Auswerteeinheit angeschlossen sind. Die Lanze ist eine übliche Trägerlanze, auf die das Trägerrohr zur Messung aufgesteckt wird und mit der es während der Messung gehalten wird.

Die Signaländerung an der Induktionsspule beginnt in nur etwa 1 cm Abstand oder weniger von der Metallschmelze, so dass Einflüsse der Umgebung, wie Interferenzen, weitestgehend vermieden werden. Durch die an das Metall annähernde beziehungsweise in das Metall eintauchende Induktionsspule werden die Schwingungen des Oszillators zunächst gedämpft und dann komplett unterdrückt. Ein entsprechendes Signal kann als Schwellwert beispielsweise über einem Transistor ausgegeben werden.

Erfingdungsgemäß ist die Induktionsspule zumindest seitlich von einem an dem Körper fixierten Schutzrohr umgeben, wobei dieses Schutzrohr aus Pappe gebildet ist. Dadurch ist die Induktionsspule vor der Einwirkung von Schlacke geschützt. Das Schutzrohr kann an seiner Außenseite von einer Schicht aus Pappe, Papier oder einem anderen, bei den unmittelbar oberhalb oder in der Schlackeschicht herrschenden Temperaturen, brennbaren Material umgeben sein. Eine solche Schicht verhindert durch ihr Abbrennen ein Anhaften von Schlacke an dem Schutzrohr weitestgehend.

Um eine möglichst genau Messung zu erhalten, sollte der Durchmesser des Schutzrohres höchstens 6 mal, vorzugsweise höchstens 3 mal, insbesondere höchstens 2 mal so groß sein wie der Durchmesser der Induktionsspule. Der Abstand zwischen Induktionsspule und Oszillator sollte höchsten 5 cm, vorzugsweise höchstens 3 cm betragen, so dass Interferenzen mit der Umgebung minimiert werden. Auf der Leiterplatte kann ein Widerstand und an dem im Inneren des Trägerrohres angeordneten Ende des Messkopfes ein Kontaktstück angeordnet sein zur elektrischen Verbindung des Messkopfes mit einer durch das Trägerrohr führbaren Lanze, wobei der Widerstand mit mindestens einem Kontakt des Kontaktstücks verbunden ist. Dadurch kann bei einer dem Fachmann an sich geläufigen Verschaltung beispielsweise ein Kurzschluss zwischen zwei Kontakten erzeugt werden, so dass die mit der Lanze verbundene Auswerteeinrichtung erkennt, dass der Messkopf eine Induktionsspule zur Grenzflächenbestimmung aufweist und die Datenausgabe in entsprechender Weise erfolgt. Dies sichert, dass eine Standardlanze verwendet werden kann, an die zum Zwecke anderer Messungen auch andere bekannte Sensoren, wie beispielsweise Temperatursensoren angesteckt werden können. Durch die Standardisierung der Abmaße des Kontaktstückes ist dies möglich, der Widerstand gewährleistet die Erkennung der Art des auf die Lanze gesteckten Sensors.

Zweckmäßigerweise ist außerhalb des Körpers des Messkopfes, vor dessen stirnseitigem Ende ein Badkontakt angeordnet, der durch das Trägerrohr und die anschließende Lanze hindurch geerdet ist. Dieser Badkontakt dient der zusätzlichen Bestimmung der Grenzfläche zwischen der Schlackeschicht und der darüber angeordneten Gasatmosphäre, da ein Kurzschluss entsteht, sobald der Badkontakt die Schlacke berührt (diese ist im Normalfall im allgemeinen geerdet). Dadurch kann sowohl die obere als auch die untere Grenzfläche der Schlacke festgestellt und damit die Dicke der Schlackeschicht ermittelt werden.

Es ist weiterhin vorteilhaft, dass auf der Leiterplatte ein mit dem Oszillator verbundener A/D-Wandler angeordnet ist. Der A/D-Wandler ist zweckmäßig mit einer Signalleitung für die Weiterleitung der Messsignale verbunden, wobei er mit einer auf der Leiterplatte angeordneten Kontaktstelle verbunden sein kann, an der die Signalleitung angeschlossen ist. Der A/D-Wandler weist ferner zweckmäßigerweise eine Stromversorgungsleitung auf.

Dadurch, dass der Messkopf ein Kontaktstück aufweisen kann, welches mit einem Signalausgang und einem Stromversorgungsanschluss des A/D-Wandlers elektrisch leitend verbunden ist, dass das Kontaktstück mit einer in das Trägerrohr eingeführten Lanze verbunden ist und innerhalb der Lanze mindestens eine Signalleitung und mindestens eine Stromversorgungsleitung angeordnet sind, die einerseits mit dem Kontaktstück und andererseits mit einem Mess- oder Auswertegerät verbunden sind, ist eine Weiterleitung der Messsignale von Sensoren als digitale Signale möglich, so dass elektrische, durch die Umgebung bedingte Störungen weitgehend eliminiert werden. Analoge Signale werden auf diese Weise nur über eine sehr kurze Stecke geführt, die Stromversorgung jedoch problemlos ermöglicht.

Zweckmäßig ist es, dass an dem dem Trägerrohr abgewandten Ende des Schutzrohres eine Abdeckung, vorzugsweise aus einem bei Stahlschmelzetemperaturen verbrauchbaren Material, insbesondere aus Papier oder Pappe, angeordnet ist, um die Induktionsspule vor der Schlacke zu schützen. Die Abdeckung verbrennt und schafft kurzzeitig dadurch einen Gasraum, der das Anhaften von Schlacke beim Durchtritt durch die Schlackeschicht verhindert.

In der erfindungsgemäßen Vorrichtung ist prinzipiell die gesamte Messelektronik als Einwegmaterial ausgelegt, welches nach einmaligem Gebrauch zusammen mit dem Messkopf und dem Trägerrohr entsorgt wird. Der Messkopf kann weitere Sensoren tragen, beispielsweise Sauerstoffsensoren, optische Sensoren oder Temperatursensoren, die in üblicherweise über das Kontaktstück mit einer Auswerteelektronik verbunden werden können.

Nachfolgend wird ein Ausführungsbeispiel der Erfindung an Hand einer Zeichnung näher erläutert. In der Zeichnung zeigt:
- Fig. 1: die schematische Darstellung eines Messkopfes und
- Fig. 2: einen Messkopf mit Schaltungsanordnung.

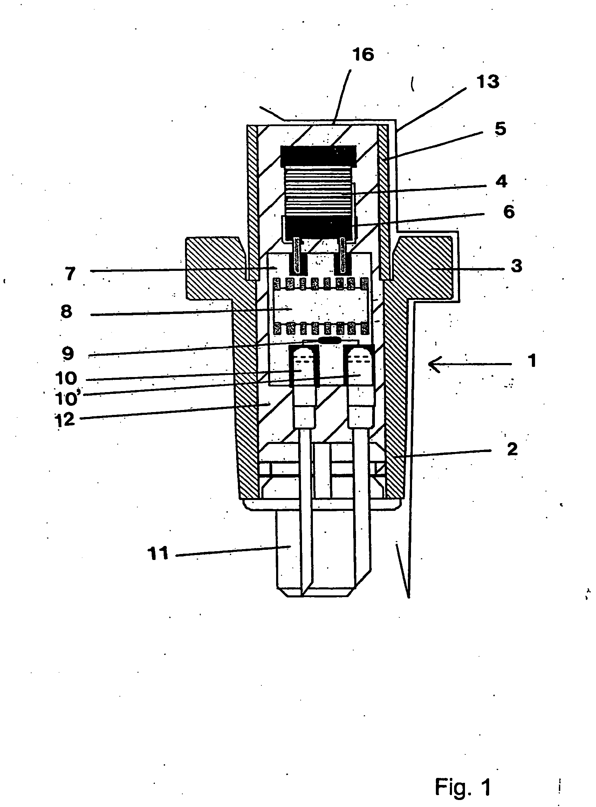

Der in Fig. 1 dargestellte Messkopf 1 weist einen zylindrischen Schaft 2 auf, der in ein nicht dargestelltes Trägerrohr zur Halterung eingeschoben wird, bis das Trägerrohr an eine Kante des Kragens 3 des Messkopfes 1 anschlägt. Damit ist eine definierte Positionierung möglich. Unmittelbar vor dem Kragen 3 ist außerhalb des Messkopfes 1 die Induktionsspule 4 angeordnet. Sie ist seitlich von einem Schutzrohr 5 (aus Pappe oder Quarzglas) umgeben, welches an seiner Außenseite eine nicht dargestellte Schicht aus Pappe aufweisen kann. Der Durchmesser des Schutzrohres ist etwa 2 mal so groß wie der Durchmesser der Induktionsspule. An der äußeren Stirnseite des Schutzrohres ist eine Abdeckschicht 16 aus Pappe angeordnet. Die Spule 4 ist aus einem auf einem Ferritkern 6 gewickelten Kupferdraht gebildet. Sie ist an eine Leiterplatte 7 angeschlossen, die einen Schaltkreis 8 mit einem Oszillator und einem A/D-Wandler aufweist. Des weiteren weist die Leiterplatte 7 einen Widerstand 9 auf. Der Widerstand ist mit zwei Kontakten 10; 10' verbunden, die wiederum mit dem Kontaktstück 11 verbunden sind. Eine auf das Kontaktstück aufgesteckte Lanze, deren Signalleitungen an die Kontakte des Kontaktstücks 11 und somit insbesondere an die Kontakte 10;10' angeschlossen werden, ermöglicht damit die Feststellung dieses Widerstands und damit die messtechnische Erfassung des Messkopfes als Vorrichtung zum Bestimmen einer (oder mehrerer) Grenzfläche. Bei der üblichen Größe des Messkopfes 1 im Rahmen der üblichen Trägerrohrabmessungen beträgt der Abstand zwischen der Induktionsspule 4 und den im Schaltkreis 8 integrierten Oszillator nur etwa 2 cm, so dass Umgebungseinflüsse nahezu ausgeschlossen sind. Der innere Hohlraum 12 des Messkopfes sowie das Innere des Schutzrohres 5 sind mit Zement gefüllt, so dass die gesamte Sensortechnik vom Zement eingeschlossen, stabilisiert und geschützt ist. Die Eintauchseite der Induktionsspule 4 ist mit einer etwa 2-4 mm dicken Zementschicht bedeckt.

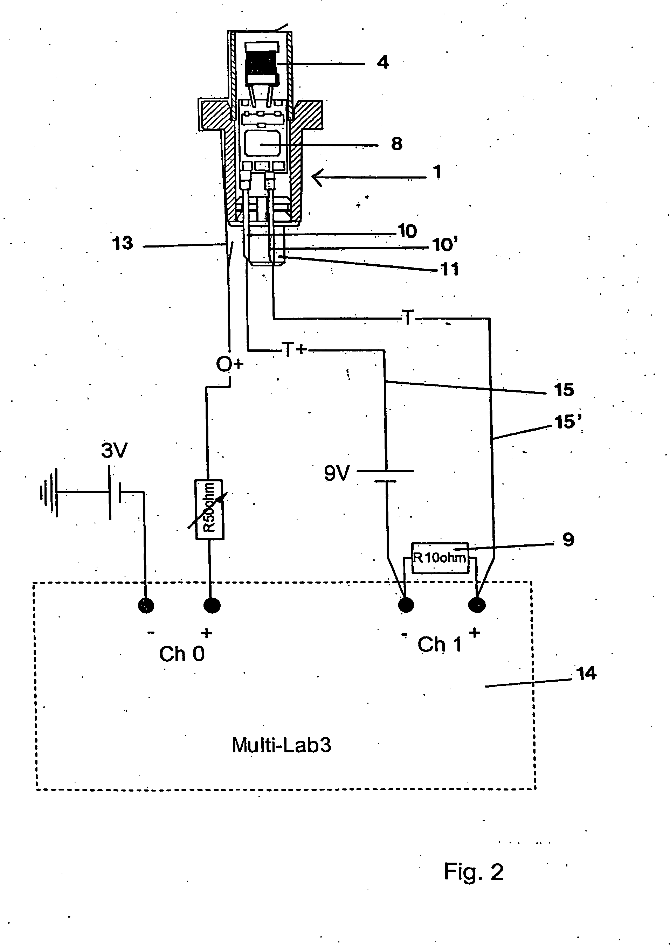

In Eintauchrichtung vor dem Schutzrohr 5 ist ein Badkontakt 13 angeordnet, der an der Außenseite des Messkopfes 1 anliegt und über die auf das Kontaktstück 11 des Messkopfes 1 aufzuschiebende Lanze geerdet ist. Sobald der Badkontakt 13 beim Absenken der Vorrichtung mit der Schlackeschicht in Berührung kommt, entsteht ein Kurzschluss, der von einem Computer oder Auswertegerät 14 (Fig. 2) festgestellt wird. Beim weiteren Absenken der Vorrichtung wird die Schwingung des Oszillators des Schaltkreises 8 stark gedämpft, so bald die Induktionsspule 4 sehr nahe (etwa 1 cm) an die leitende Oberfläche der Metallschmelze herangeführt ist und endet bei weiterem Absenken in die Metallschmelze. Diese Dämpfung kann durch einen Transistor detektiert werden, so dass eine entsprechende Spannungsänderung mit der Schlacke-Metallschmelze-Grenzfläche korreliert werden kann. Dabei wird die Differenz zwischen den beiden Signalen (Kurzschluss des Badkontaktes und Dämpfung der Schwingung des Oszillators) direkt mit den entsprechenden Positionen der Vorrichtung bei der Abwärtsbewegung korreliert und aus der Höhendifferenz die Dicke der Schlackeschicht ermittelt.

Die in Fig. 2 schematisch dargestellten Signalleitungen 15;15' leiten die Signale von dem Schaltkreis 8 an das Computer oder Auswertegerät 14 weiter. Diese Signalleitungen 15;15' sind innerhalb einer üblichen Lanze angeordnet und werden mittels des Kontaktstückes 11 mit dem Messkopf 1 kontaktiert. An der gleichen Lanze können diese Signalleitungen 15;15' auch mit einer anderen Messvorrichtung, also über ein Kontaktstück eines anderen Messkopfes beispielsweise mit einem Thermoelement verbunden werden. Durch diese Lanze können auch weitere Leitungen hindurchgeführt sein, so dass an dem Messkopf 1 zusätzlich angeordnete weitere Sensoren, beispielsweise ein Thermoelement, elektrochemische oder optische Sensoren, mit dem Computer oder Auswertegerät 14 verbunden werden können, so dass weitere Messungen zeitgleich möglich sind. Auch die zusätzliche Anordnung einer Probenkammer im Messkopf oder in dem Trägerrohr ist möglich.

## Patentansprüche

1. Vorrichtung zum Bestimmen mindestens einer Grenzfläche einer Schlackeschicht auf einer Metallschmelze mit einem Trägerrohr, an dessen einem Ende ein Messkopf (1) angeordnet ist mit einem in dem Trägerrohr fixierten Körper, der eine dem Trägerrohr abgewandte Stirnseite aufweist, wobei im Inneren des Messkopfes (1) ein Oszillator und außerhalb des Körpers, vor dessen stirnseitigem Ende, eine mit dem Oszillator verbundene Induktionsspule (4) zur Bestimmung der Grenzfläche angeordnet sind, wobei die Induktionsspule (4)
zumindest seitlich von einem an dem Körper fixierten Schutzrohr (5) umgeben ist und wobei das Schutzrohr (5) aus Pappe gebildet ist.

2. Vorrichtung nach Anspruch 1, **dadurch gekennzeichnet, dass** das Schutzrohr (5) an seiner Außenseite von einer Schicht aus Pappe, Papier oder einem anderen brennbaren Material umgeben ist.

3. Vorrichtung nach einem der Anspruch 1 oder 2, **dadurch gekennzeichnet, dass** der Durchmesser des Schutzrohres (5) höchstens 6 mal, vorzugsweise höchstens 3 mal so groß ist wie der Durchmesser der Induktionsspule (4).

4. Vorrichtung nach einem der Ansprüche 1 bis 3 **dadurch gekennzeichnet, dass** der Abstand zwischen Induktionsspule (4) und Oszillator höchstens 5 cm, vorzugsweise höchstens 3 cm beträgt.

5. Vorrichtung nach einem der Ansprüche 1 bis 4 **dadurch gekennzeichnet, dass** auf einer im Inneren des Messkopfes (1) angeordneten Leiterplatte (7), an der der Oszillator angeordnet sein kann, ein Widerstand (9) zur Erkennung der Art des auf eine Lanze gesteckten Sensors angeordnet ist, dass an dem im Inneren des Trägerrohrs angeordneten Ende des Messkopfes (1) ein Kontaktstück (11) angeordnet ist mit Kontakten zur elektrischen Verbindung des Messkopfes (1) mit einer durch das Trägerrohr führbaren Lanze, wobei der Widerstand (9) mit mindestens einem Kontakt des Kontaktstücks (11) verbunden ist.

6. Vorrichtung nach einem der Ansprüche 1 bis 5 **dadurch gekennzeichnet, dass** außerhalb des Körpers des Messkopfes (1), vor dessen stirnseitigem Ende ein Badkontakt (13) angeordnet ist.

7. Vorrichtung nach Anspruch 6 **dadurch gekennzeichnet, dass** im Inneren des Messkopfes (1), vorzugsweise auf der Leiterplatte (7), ein mit dem Oszillator verbundener A/D-Wandler angeordnet ist.

8. Vorrichtung nach Anspruch 7, **dadurch gekennzeichnet, dass** der A/D-Wandler mit einer Signalleitung (15;15') für die Weiterleitung von Messsignalen verbunden ist.

9. Vorrichtung nach Anspruch 7, **dadurch gekennzeichnet, dass** der A/D-Wandler mit einer, insbesondere auf der Leiterplatte (7) angeordneten, Kontaktstelle verbunden ist, an der die Signalleitung (15;15') angeschlossen ist.

10. Vorrichtung nach einem der Ansprüche 7 bis 9, **dadurch gekennzeichnet, dass** der A/D-Wandler eine Stromversorgungsleitung aufweist.

11. Vorrichtung nach Anspruch 1, **dadurch gekennzeichnet, dass** an dem dem Trägerrohr abgewandten Ende des Schutzrohres eine Abdeckung, vorzugsweise aus einem bei Stahlschmelzetemperaturen verbrauchbaren Material, insbesondere aus Papier oder Pappe, angeordnet ist.

## Claims

1. A device for determining at least one boundary layer of a slag layer on molten metal by means of a carrier tube at one end of which a measuring head (1) with a body located in the carrier tube is arranged, said body comprising a front side facing away from the carrier tube, wherein an oscillator is arranged in the interior region of the measuring head (1) and an induction coil (4) which is connected to the oscillator is arranged outside of the body in front of the latter's front-sided end, said induction coil (4) being intended for determining the boundary layer, wherein the induction coil (4) is at least laterally surrounded by a protecting tube (5) located on the body and wherein the protecting tube (5) is formed out of paper.

2. The device according to Claim 1, **characterised in that** the protecting tube (5) is surrounded by a layer made of cardboard, paper or another combustible material on its outside.

3. The device according to any one of Claims 1 or 2, **characterised in that** the diameter of the protecting tube (5) is no more than six times, preferrably no more than three times the size of the diameter of the induction coil (4).

4. The device according to any one of Claims 1 to 3, **characterised in that** the distance of the induction coil (4) from the oscillator is no more than 5 cm, preferrably no more than 3 cm.

5. The device according to any one of Claims 1 to 4, **characterised in that** a resistor (9) for identifying the type of the sensor fitted on a lance is arranged on a printed circuit board (7) which is arranged in the interior region of the measuring head (1) and at which the oscillator can be arranged, and that a contact piece (11) is arranged on the end of the measuring head (1) that is arranged in the interior region of the carrier tube, said contact piece (11) having contacts for electrically connecting the measuring head (1) to a lance which can be passed through the carrier tube, wherein the resistor (9) is connected to at least one contact of the contact piece (11).

6. The device according to any one of Claims 1 to 5, **characterised in that** a bath contact (13) is arranged outside of the body of the measuring head (1) in front of the front-sided end thereof.

7. The device according to Claim 5, **characterised in that** an analog-to-digital converter which is connected to the oscillator is arranged in the interior region of the measuring head (1), preferrably on the printed circuit board (7).

8. The device according to Claim 7, **characterised in that** the analog-to-digital converter is connected to a signal line (15; 15') for the transmission of measurement signals.

9. The device according to Claim 7, **characterised in that** the analog-to-digital converter is connected to a contact point which is, in particular, arranged on the printed circuit board (7) and to which the signal line (15; 15') is connected.

10. The device according to any one of Claims 7 to 9, **characterised in that** the analog-to-digital converter comprises a power supply line.

11. The device according to Claim 1, **characterised in that** a cover is arranged on the end of the protecting tube that is facing away from the carrier tube, said cover being preferrably made of a material that can be used at steel melting temperatures, more preferrably made of paper or cardboard.

## Revendications

1. Dispositif pour déterminer au moins une surface limite d'une couche de scorie sur une masse fondue métallique avec un tuyau porteur à une extrémité duquel une tête de mesure (1) est disposée avec un corps fixé dans le tuyau porteur qui présente une face frontale détournée du tuyau porteur, dans lequel un oscillateur est disposé à l'intérieur de la tête de mesure (1) et une bobine d'induction (4) reliée à l'oscillateur pour la détermination de la surface limite est disposée à l'extérieur du corps avant son extrémité côté frontal, dans lequel la bobine d'induction (4) est au moins entourée latéralement par un tuyau protecteur (5) fixé au corps et dans lequel le tuyau protecteur (5) est formé de carton.

2. Dispositif selon la revendication 1, **caractérisé en ce que** le tuyau protecteur (5) est entouré sur son côté externe d'une couche de carton, papier ou d'un autre matériau combustible.

3. Dispositif selon la revendication 1 ou 2, **caractérisé en ce que** le diamètre du tuyau protecteur (5) est au maximum 6 fois, de préférence au maximum 3 fois aussi grand que le diamètre de la bobine d'induction (4).

4. Dispositif selon l'une quelconque des revendications 1 à 3, **caractérisé en ce que** l'écart entre la bobine d'induction (4) et l'oscillateur est au maximum de 5 cm, de préférence au maximum de 3 cm.

5. Dispositif selon l'une quelconque des revendications 1 à 4, **caractérisé en ce qu'**une résistance (9) pour la reconnaissance du type de capteur enfiché sur une lance est disposée sur une carte imprimée (7) disposée à l'intérieur de la tête de mesure (1) sur laquelle l'oscillateur peut être disposé, qu'une pièce de contact (11) est disposée sur l'extrémité de la tête de mesure (1) disposée à l'intérieur du tuyau porteur avec des contacts pour la connexion électrique de la tête de mesure (1) à une lance pouvant être guidée à travers le tuyau porteur, dans lequel la résistance (9) est reliée à au moins un contact de la pièce de contact (11).

6. Dispositif selon l'une quelconque des revendications 1 à 5, **caractérisé en ce qu'**un contact pour bain (13) est disposé à l'extérieur du corps de la tête de mesure (1) avant son extrémité côté frontal.

7. Dispositif selon la revendication 5, **caractérisé en ce qu'**un convertisseur A/N relié à l'oscillateur est disposé à l'intérieur de la tête de mesure (1), de préférence sur la carte imprimée (7).

8. Dispositif selon la revendication 7, **caractérisé en ce que** le convertisseur A/N est relié à une ligne de signaux (15 ; 15') pour la transmission de signaux de mesure.

9. Dispositif selon la revendication 7, **caractérisé en ce que** le convertisseur A/N est relié à un point de contact disposé notamment sur la carte imprimée (7) au niveau duquel la ligne de signaux (15 ; 15') est raccordée.

10. Dispositif selon l'une quelconque des revendications 7 à 9, **caractérisé en ce que** le convertisseur A/N présente une ligne d'alimentation électrique.

11. Dispositif selon la revendication 1, **caractérisé en ce qu'**un recouvrement, de préférence en un matériau pouvant être consommé à des températures de fusion de l'acier, notamment en papier ou carton, est disposé à l'extrémité du tuyau protecteur détournée du tuyau porteur.
